# EUROPÄISCHE PATENTSCHRIFT

(11) **EP 1 586 422 B1**
(45) Veröffentlichungstag und Bekanntmachung des Hinweises auf die Patenterteilung: **04.04.2012**
(21) Anmeldenummer: 05450070.7
(22) Anmeldetag: 14.04.2005
(51) Int. Cl.: B25J 9/16, B65G 61/00, C21D 9/00

(54) **Verfahren und Vorrichtung zum Handhaben von Werkstücken mit einem 3D-Sensor**
Method and device for manipulating workpieces with a 3D sensor
Méthode et dispositif pour manipulation de pièces avec un capteur 3D

(30) Priorität: 15.04.2004 AT 6522004
(43) Veröffentlichungstag der Anmeldung: 19.10.2005
(73) Patentinhaber: BMC metal consulting GmbH, 9220 Velden am Wörther See (AT)
(72) Erfinder: Rimmer, Karl DI Dr. mont., 9231 Köstenberg (AT); Rimmer, Elisabeth, 9231 Köstenberg (AT); Kosche, Harald, 9231 Köstenberg (AT); Schellander, Ernst, Ing. Mag., 9220 Velden (AT)
(74) Vertreter: Dungler, Karin

(56) Entgegenhaltungen:
- DE-A1- 10 035 450
- US-A- 5 175 692
- PATENT ABSTRACTS OF JAPAN Bd. 013, Nr. 455 (M-879), 13. Oktober 1989 (1989-10-13) -& JP 01 176795 A (KAWASAKI STEEL CORP; others: 01), 13. Juli 1989 (1989-07-13)
- PATENT ABSTRACTS OF JAPAN Bd. 2000, Nr. 03, 30. März 2000 (2000-03-30) -& JP 11 333770 A (KOBE STEEL LTD), 7. Dezember 1999 (1999-12-07)

## Beschreibung

Die Erfindung betrifft ein Verfahren zum Handhaben von Werkstücken und eine Vorrichtung, mit welcher das Verfahren ausgeführt werden kann.

Beim Be- oder Verarbeiten von Teilen (Werkstücken) ergibt sich häufig das Problem, die zu be- oder verarbeitenden Teile aus einem Gebinde in ein anderes Gebinde, beispielsweise ein Gebinde, das für die weitere Bearbeitung oder Verarbeitung ausgelegt ist (z.B. Härteroste), umzusetzen.

Dieses Problem stellt sich beispielsweise beim Herstellen von Fahrzeuggetrieben, insbesondere jenen für Personenkraftwagen, deren Herstellung von den Automobilherstellern entweder zunehmend an spezialisierte Zulieferer ausgelagert wird oder es wird der Weg bestritten, dass zwei oder mehrere Automobilhersteller die Getriebefertigung aus ökonomischen Gründen in einem Gemeinschaftsunternehmen bündeln.

Die aus der Auslagerung oder dem Zusammenschluss resultierenden Stückzahlen der Fahrzeuggetriebe ermöglichen den Herstellern eine Auslastung von Produktionskapazitäten im Mehrschichtbetrieb, sowie eine weitgehende Automatisierung der Produktionsabläufe.

Dabei ist das Potenzial für die Automatisierung der Weichbearbeitung und der Hartbearbeitung der Getriebeteile weitestgehend ausgereizt, es besteht aber im Übergangsbereich von der Weichbearbeitung zum Härten und vom Härten zur Hartbearbeitung noch Nachholbedarf.

Dies betrifft insbesondere das automatisierte Be- und Entladen der Härteroste, das sind Gebinde, in die Getriebeteile, die nach der Weichbearbeitung anfallen (Grünteile), eingesetzt/eingelegt werden, um dem Härtungsvorgang unterworfen zu werden. Die nach dem Härten anfallenden, gehärteten Getriebeteile (Rot-Teile) müssen aus den Härterosten wieder in Transportgebinde umgesetzt werden.

Das Handhaben der Getriebeteile im Übergangsbereich zwischen Weichbearbeitung zum Härten und vom Härten zur Hartbearbeitung wird noch weitgehend von Hand aus vorgenommen und zwar aus folgenden Gründen:
a) Mit jedem Durchlauf durch den Härteofen tritt eine nicht kontrollierbare, dreidimensionale Verformung der Härteroste auf.
b) Die vereinzelt in der Praxis eingesetzten Problemlösungen sind nicht zufriedenstellend, da sie entweder auf rein mathematischen Hochrechnungen der Positionsveränderung der Formnester in den Härterosten oder auf einer rein mechanischen, zweidimensionalen und zeitintensiven Positionsbestimmung der Formnester beruhen.
c) Eine sehr hohe Typenvielfalt an Bauteilen und die damit einhergehende Vielfalt an Härterosten und Nestgeometrien erschwert eine Automatisierung.
d) Konventionelle, auf optischen Prinzipien beruhende Robot-Vision Systeme im Anwendungsumfeld Härteroste vor dem Hintergrund der heterogenen Beleuchtungsverhältnisse stoßen an technische Grenzen.
   Vor dem Hintergrund, dass
   - durch das manuelle Beladen/Entladen der Härteroste wertvolle Produktionsressourcen gebunden werden,
   - die Produktionskapazitäten, insbesondere die Härteöfen, eine kontinuierliche Auslastung voraussetzen und
   - die Automobilhersteller und deren Zulieferer einem zunehmenden Kostendruck ausgesetzt sind,
wird seitens der Anwender verstärkt nach einer zufriedenstellenden Problemlösung gesucht.

Die gegenwärtig am Markt verfügbaren Lösungen für die Positionsbestimmung von Formnestern in Härterosten sind entweder rein mechanisch oder auf der konventionellen Bildverarbeitungstechnik beruhende 2D-Systemlösungen. Bei den mechanischen Lösungen wird versucht, die Prüfmerkmale am Prüfobjekt mit Messtastern zu erfassen. Das Dokument DE 100 35 450 A1 offenbart eine solche mechanische Lösung. Bei den 2 ½-D bildverarbeitungstechnischen Verfahren wird vom Prüfobjekt und/oder vom Prüfmerkmal ein Bild akquiriert, das in der Folge mittels einer speziellen Bildverarbeitungssoftware ausgewertet wird.

Die oben beschriebenen konventionellen Lösungsansätze haben insbesondere folgende Nachteile:
- mechanische Lösungsansätze sind zu langsam und zu unflexibel. So sind für jeden Härterost, jedes Transportgebinde und Werkstück spezifische Postionierhilfen erforderlich.
- bildverarbeitungstechnische Lösungen zu teuer, zu langsam und gegenüber Schwankungen der Oberflächenfarbe zu störanfällig. Darüber hinaus wird beim 2 ½-D Verfahren, die dritte Ebene nur approximativ geschätzt.

Ein weiterer Nachteil der konventionellen Verfahren resultiert daraus, dass die Prüfungen einerseits eine exakte Positionierung und Fixierung der Prüfobjekte voraussetzen und dass aus Taktzeitgründen und aus Gründen der Komponentenanordnung, z.B. Anordnung der Beleuchtung und der Kameras, um das Prüfobjekt und außerhalb des Arbeitsbereiches des Manipulators, alle Prüfroutinen vor dem eigentlichen Manipulationsvorgängen vorgenommen werden müssen. Dies führt dazu, das aus den Manipulationsvorgängen resultierende Veränderungen am Prüfobjekt nicht erfasst werden und zu Störungen bei der Manipulation führen. Darüber hinaus wird bei beiden bekannten Verfahren vorausgesetzt, dass sich die geometrische Verformung der Prüfobjekte auf eine Längen- und Breitenausdehnung beschränkt. Rahmenbedingungen, wie sie in der Praxis in der Regel nicht anzutreffen sind.

Der Erfindung liegt die Aufgabe zu Grunde, ein Verfahren und eine Vorrichtung anzugeben, mit denen das Umsetzen von Werkstücken, insbesondere von Getriebeteilen, schonend und doch automatisiert durchgeführt werden kann.

Gelöst wird diese Aufgabe erfindungsgemäß mit einem Verfahren, das die Merkmale des Anspruches 1 aufweist.

Insoweit die erfindungsgemäße Vorrichtung zum Durchführen dieses Verfahrens betroffen ist, wird diese Aufgabe mit einer Vorrichtung gelöst, welche die Merkmale des Vorrichtungshauptanspruches besitzt.

Bevorzugte und vorteilhafte Ausgestaltungen des erfindungsgemäßen Verfahrens und bevorzugte Ausführungsformen der erfindungsgemäßen Vorrichtung sind Gegenstand der Unteransprüche.

Dadurch, dass bei der Erfindung die Form der Gebinde, in welchen die Teile (Getriebeteile) einer weiteren Bearbeitung (Härtung) zugeführt werden, räumlich erfasst wird (3D-Sensor) und weil bei der Erfindung auch die Lage der Teile in den Gebinden, in denen sie bearbeitet worden sind, räumlich erfasst wird, ist es möglich, dass die zu bearbeitenden und/oder bearbeiteten Werkstücke schonend und beispielsweise ohne dass die Werkstücke beim Umsetzen an Anlageteilen und/oder Gebindeteilen anschlagen oder entlangschleifen, gehandhabt werden.

Zusätzlich erlaubt es die Erfindung, für die Aufnahme von zu bearbeitenden Werkstücken nicht mehr brauchbare Gebinde zu erkennen und auszuscheiden.

Die erfindungsgemäße Verfahrensweise und die erfindungsgemäße Vorrichtung haben den Vorteil, dass sie flexibler sind als die bekannten, auf taktilen Verfahren basierenden Technologien für die Positionsbestimmung der Formnester in den Gebinden (Härterosten), da letztere auf Grund der Formnestgeometrie-Vielfalt zu unflexibel sind.

Des Weiteren ist die erfindungsgemäße Verfahrensweise und die erfindungsgemäße Vorrichtung vorteilhaft gegenüber den gegenwärtig verfügbaren, auf optischen Prinzipien beruhenden Technologien für eine berührungslose Positionsbestimmung der Formnester in den Gebinden (Härteroste) vor dem Hintergrund stark divergierender Oberflächenfarben der Härteroste (von hellgrau über blau bis dunkelgrau) und der schwankenden Beleuchtungsverhältnisse im Systemumfeld, weshalb die bekannten optischen Prinzipien häufig versagen.

Bei der Erfindung kann so gearbeitet werden, dass die mit einer dreidimensionalen Erfassung der Formnestgeometrie und/oder Geometrie (Form) der zu handhabenden Teile verbundene Datenmenge aus Taktzeitgründen, z.B. im Sensor, einer Vorverarbeitung der Daten unterworfen wird, insbesondere um die Datenmenge zu verkleinern.

Weiters besteht die Möglichkeit, dass die vom Sensorsystem generierten Positionsdaten in einer für eine Bahnsteuerung geeignete Form ausgegeben werden, damit die Werkstücke von einem im Raum frei beweglichen Greifersystem (Manipulator) kollisionsfrei in das gewählte Formnest abgegeben werden können. Dies ist vor allem beim Handhaben von zu härtenden Werkstücken wesentlich, da die noch ungehärtete Werkstoffoberfläche nicht beschädigt werden darf.

Bei der Erfindung ist vorteilhaft, dass in einer Ausführungsform ein echtzeitfähiges 3D-Sensor/Aktorsystem für die Positionsbestimmung der Formnester in den Gebinden, in welchen die Werkstücke für die Bearbeitung aufgenommen sind (Härterost), mit daran anschließender dreidimensionaler Positionsnachführung vorliegt.

Ein im Rahmen der Erfindung besonders bevorzugter 3D-Sensor ist ein Bildbearbeitungssystem, das aus einer linienförmigen, in der Linienbreite homogenen, lasergestüzten Beleuchtungsquelle, einer High-speed-Matrix-Kamera mit integrierter Datenvorverarbeitung und einen auf der Triangulation basierenden Software-Algorithmus, gegebenenfalls mit einer dialogorientierten Bedieneroberfläche, für die Eingabe der Härterost-SOLL-Daten besteht.

Vorteilhaft ist es bei der Erfindung auch, wenn das Aktorsystem eine 3D-Greifernachführung aufweist, die aus einer echtzeitfähigen Bahn-subsystemsteuerung für das Nachführen des Greifersystems entsprechend der 3D-Sensordaten erlaubt, und einer kompakten servogeführten Manipulationsmechanik.

Das System zum Erfassen der räumlichen Geometrie von Formnestern der Gebinde (Härteroste) und zum Erfassen der Lage der zu handhabenden Werkstücke kann wie folgt ausgeführt sein:

Grundlage für das bevorzugte System zum Erfassen ist das Lichtschnittverfahren.

Das Prinzip zum Ermitteln von 3D-Informationen basiert in einer beispielhaften Ausführungsform auf dem Prinzip der Triangulation und ist somit ein Verfahren zur Entfernungs- bzw. Höhenmessung. Dabei befinden sich der Messwertaufnehmer, die Kamera, und die Beleuchtung, der Laser, auf einer Seite des Messobjektes. Die Anordnung der Elemente zueinander wird so gewählt, dass die zu beurteilende Szene mit dem Laser beleuchtet werden kann, während die Kamera in einem festen, definierten Winkel zum Laserstrahl auf den Auftreffpunkt des Lasers gerichtet ist. Bei unterschiedlichen Objekthöhen wird im Bildfeld der Kamera der durch die Höhendifferenz ausgelenkte Lichtpunkt an einer korrespondierenden Position auf dem Bildsensor abgebildet. Mit den bekannten Sensorgeometrien und dem Wissen, dass der Ort des Lichtpunktes auf dem Objekt eine Funktion der Objekthöhe ist, kann eine Entfernungs- bzw. Höhenmessung durchgeführt werden.

Bei Lichtschnittanwendung wird das Messprinzip dahingehend erweitert, dass in einem flächigen Kamerabild die Höheninformation durch einen Laserlichtstrich erzeugt wird.

Die Höhenauflösung des Sensors hängt von dem jeweiligen Lichtschnittwinkel und der Kameraauflösung ab. Mit der bekannten, festen Anordnung der Sensorkomponente lassen sich Geometrie und Form des Messobjektes über Form und Lage der Lichtlinie ermitteln.

Beim Lichtschnittverfahren ist im Gegensatz zum Punkttriangulationsverfahren keine Querbewegung erforderlich. Das aufgenommene Bild enthält somit beim Lichtschnittverfahren die Objektinformation eines kompletten Profilschnitts über die gesamte Bildfeldbreite. Die laterale Zuordnung, quer zur Vorschubrichtung, der Messwerte ist durch diesen Messaufbau eindeutig festgelegt, da die Höhen- und Breiteninformation ohne eine zusätzliche Verschiebung im Messbild vorhanden sind.

Unter der Voraussetzung, dass sich Messobjekt und Sensoreinheit in wenigstens einer Achse relativ zueinander bewegen lassen, ist es möglich, eine 3D-Analyse der Objektform durchzuführen.

Bei allen Anwendungen in der Bildverarbeitung spielt die Beleuchtung der zu untersuchenden Szene eine wesentliche Rolle. Zur Erzeugung des Lichtstriches wird ein Halbleiterlaser einer speziellen Wellenlänge eingesetzt.

Bei dem bevorzugt eingesetzten Laser liegt die Wellenlänge im Rotbereich (ca. 690 nm) mit einer max. möglichen Laserleistung von 50 mW. Zur Erzeugung des eigentlichen Lichtstrichs werden bevorzugt angepasste Kollimatoren und Mikrolinienoptiken eingesetzt.

Zur Unterdrückung von Störlicht können empfangsseitig Bandfilter verwendet werden. Intensive Störstrahlung im Bereich der Messwellenlänge (z.B. Sonnenstrahlung) soll verhindert werden.

Da ein optisches Verfahren vorliegt, ist ein Messen von Hinterschneidungen oder anderen optisch abgedeckten Bereichen nicht möglich. Alle im Messbereich befindlichen Gegenstände des optisch nicht durchlässigen Werkstoffes gehen in das Messergebnis mit ein. Außerdem ist es möglich, dass an sehr dunklen oder spiegelnden Messstellen, sowie bei fleckigen Oberflächen mit starken Hell-Dunkel-Kontrasten, Lücken bzw. Bloomingbereiche im Messsignal entstehen, die das Endergebnis beeinflussen können.

Die bei Anwendung der Erfindung beim Umsetzen gehärteter Teile vorkommenden Rostfarben von hellgrau bis dunkelgrau und blau fallen nicht in den genannten kritischen Dynamikbereich.

Bei Messungen an Flächen, die nur unter einem Winkel und nicht senkrecht vom Sensor betrachtet werden können, lassen sich die zu erkennenden Merkmale auch nur mit der von diesem Winkel abhängigen Projektionsfläche beurteilen. Die angegebenen Auflösungen oder Genauigkeiten beziehen sich dabei immer auf die senkrechte Betrachtungsweise. Mit zunehmender Neigung der Fläche nimmt außerdem die Lichtintensität des Lichtstrichs ab, so dass in Abhängigkeit der Oberflächenbeschaffenheit ab einem bestimmtem Neigungswinkel keine Messsignale mehr aufgenommen werden können.

Die Bildpunktauflösung des Messsystems ergibt sich aus dem betrachteten Bildbereich und der Anzahl der verwendeten Kamerabildpunkte.

Weiterhin geht bei den Lichtschnittsensoren der eingestellte Lichtschnittwinkel in die Systemauflösung mit ein. Je größer der Lichtschnittwinkel gewählt wird, desto besser ist die Höhenauflösung.

Ein bevorzugter Aufbau des 3D-Sensors ist folgender:

An dem Roboter wird ein 3D-Lichtschnittsensor (1000 Hz-Version) montiert. Der Sensor hat eine Scanbreite von ca. 300 mm bei einer Scantiefe von ca. 300 mm. Die Auflösung beträgt ca. 0,3 mm in der Breitenrichtung beim 500 Hz Bildfolgefrequenz bzw. ca. 0,6 mm in den Breitenrichtung bei 1000 Hz Bildfolgefrequenz (frei konfigurierbar) und ca. 0,5 mm in der Tiefe. Der Arbeitsabstand des Sensors muss noch festgelegt werden.

Für die Scanaufnahme kann eine Vorschubgeschwindigkeit des Sensors gewählt werden, die ca. alle 0,3 mm einen Lichtschnitt erlaubt.

Hieraus ergibt sich eine Scangeschwindigkeit von ca. 150 mm/sec, was einer Scanzeit von 2,7 sec für die Strecke von 400 mm entspricht. Die Geschwindigkeit bze. Positionswerte des Sensors müssen VIRO-3D vom Roboter übermittelt werden.

Der Sensor ist beispielsweise mit einem Bildverarbeitungsrechner verbunden. Der Bildauswertrechner muss nicht zwingend in der Nähe aufgebaut werden.

Die zu scannenden Gebinde (Härteroste) können mit Vorteil so positioniert werden, dass sie sich in dem fest definierten Scanbereich befinden und für den Messzyklus still stehen. Die Merkmale für die Lagebestimmung des jeweiligen Nestes sollten im Scanbereich für das Messsystem vollständig und gut sichtbar sein, wobei sich die Farbschattierungen der Roste und Gebinde sehr stark unterscheiden können (von hellgrau, über dunkelgrau bis blau Anlassfarbe).

Optional (2D-Handkamera) wird die Messanordnung durch eine CCD-Matrixkamera mit angepasster Optik mit langer Brennweite und konzentrischer Auflichtbeleuchtung ergänzt, die eine Abbildung der Stifte auf dem Basisrost durch die Öffnungen der Lochrasterpaletten hindurch in einem Bildfeld von ca. 50 mmx50 mm mit einer Bildpunktauflösung von <0,1 mm ermöglicht.

Der Ablauf einer Messung kann der folgende sein:

Vor der ersten Vermessung werden dem System die Vermessungsparameter beispielsweise der entsprechenden Nester in einem Gebinde (Härteroste) eingelernt.

Nachdem das System eingerichtet wurde, kann die Vermessung gestartet werden. Hiezu erhält, nachdem z.B. der zu vermessende Ofenwagen mit Härterosten im Arbeitsbereich und im Stillstand ist, das Aufnahmesystem (3D-Sensor) von der Anlagensteuerung ein Freigabesignal. Während der Messaufnahme kann der Sensor mit dem Roboter kontinuierlich über die gesamte Länge der Messstrecke bewegt werden.

Während der Bewegung des Sensors wird die notwendige 3D-Information akquiriert.

Gleichzeitig findet eine Vorverarbeitung der aufgenommenen Signale statt. Anschließend wird die Position des Nestes im Gebinde bestimmt (Mittelpunkt bezogen auf Teachposition in X, Y, Z, Drehwinkel). Die komplette Information über die Messobjektposition steht am Ende eines Arbeitstaktes, beispielsweise nach höchstens 3 Sekunden, in einer für die automatisierte Weiterverarbeitung brauchbaren Form zur Verfügung.

Mit dem hier gewählten Aufbau kann eine Wiederholgenauigkeit der Positionen in X- und Y-Richtung von ca. ±0,3 mm (bzw. 0,6 mm in X bei 1000 Hz-Abtastung) und in Z-Richtung von ca. ± 0,5 mm erreicht werden.

Beispielsweise für die Palettierung von Wellen als Werkstücken in Lochraster wird nach der Lokalisation der Aufnahmebohrung der Handsensor (2D-Kameramitte) zentrisch über die Aufnahmeöffnung verfahren und eine Bildaufnahme angestoßen. Ein Auswerte-Programm bestimmt aus dem Bild den Mittenversatz des Zentrierstiftes relativ zur Palettenöffnung und berechnet daraus bei bekannter Höhendifferenz (palettentypabhängig einzulernender Parameter) die bei der Palettierung zu berücksichtigende Schräglage gegen die Normale in beiden Verkippungsachsen.

Ein Merkmal der erfindungsgemäßen Lösung besteht in einer bevorzugten Ausführungsform darin, dass vom Prüfobjekt und/oder den Prüfmerkmalen ein vollwertiges 3D-Bild akquiriert und für die Beleuchtung der Szene eine Laserlichtquelle eingesetzt wird.

Ein weiterer Vorteil der Erfindung, insbesondere zum 2 1/1 D-Verfahren, besteht darin, dass Laserbeleuchtungsquelle und der Sensor für die Bildakquisiton direkt in die Achse des Werkstückmanipulators integriert werden.

Daraus resultieren für den Anwender bei Anwendung bevorzugter Ausführungsformen der Erfindung mehrere Vorteile:
a) Es gibt keinerlei Einschränkungen bezüglich der zu erfassenden Geometriemerkmale. Diese werden berührungslos und dreidimensional erfasst. Spezielle Vorrichtungen zum exakten Positionieren der Härteroste, Transportgebinde oder der Werkstücke sind nicht erforderlich.
b) Neben den Geometriemerkmalen können auch qualitätsrelevante Prüfungen der Werkstückaufnahmen auf Beschädigungen vorgenommen werden.
c) Alle Prüfmerkmale und Parameter der Bildakquisition sind über die Softwareoberfläche individuell auf das jeweilige Prüfobjekt ohne mechanischer Umrüstvorgänge einstellbar.
d) Das gleiche Verfahren kann nicht nur für das Beladen der Härteroste und Gebinde sondern auch für das Entladen der Härteroste und Gebinde eingesetzt werden.
e) Laserlicht durch dessen Homogenität besonders gute Möglichkeiten der Filterung zulässt, womit der Einfluss von Fremdlicht ausgeschlossen werden kann. Darüber hinaus wird durch die besonders guten Möglichkeiten der Strahlbündelung auch bei stark divergierenden Oberflächenfarben, wo konventionelle Beleuchtungstechniken schnell an die Grenzen stoßen, noch eine ausreichende Kontrastierung und Bildqualität erreicht.
f) Die Integration des Sensors in die Achse des Werkstückmanipulators ermöglicht
   - eine selektive Bildakquisition. Dazu wird der Sensor je nach Anforderungen an die Bildgröße mit einem mehr oder weniger großen Abstand zum jeweiligen Prüfmerkmal und je nach Anforderungen an die zulässige Fehlergröße mit einer mehr oder weniger hohen Geschwindigkeit über das jeweilige Prüfmerkmal bewegt.
   - eine schrittweise Nachführung der SOLL-Werte in Abhängigkeit der zuletzt erfassten IST-Abweichung > kann auch zwischen zwei Be- oder Entladevorgängen eintreten.
   - dass nur die für den jeweiligen automatischen Be-oder Entladevorgang relevanten Bereiche geprüft werden, was sich gegenüber anderen Verfahren positiv in der Taktzeit auswirkt.

Im Rahmen der Erfindung wird folgendes Systemkonzept bevorzugt:
- Transport- und Manipulationssystem für Härteroste
- 3D-Vision-System für die Positionsbestimmung der Werkstückaufnahmen im Härterost
- Werkstückmanipulationssystem
- Systemsteuerung
- Puffersystemen (Option)
   Während die Systemkomponenten für den Transport und die Manipulation der Härteroste weitgehend gelöst sind und dem Stand der Technik entsprechen, ist das 3D-Vision-System für die Positionsbestimmung der Werkstückaufnahmen im Härterost, dem Werkstückmanipulationssystem auf das beschriebene Anwendungsumfeld bezogen neu.
   Eine bevorzugte, beispielhafte Ausführung des 3D-Sensor wird nachstehend beschrieben.
   Es handelt sich um ein Bildverarbeitungssystem bestehend aus einer
- linienförmigen in der Linienbreite sehr homogenen Beleuchtungsquelle, einer
- high-speed Matrixkamera mit integrierter Datenvorverarbeitung und
- einen auf der Triangulation basierenden Softwarealgorithmus mit einer dialogorientierten Bedieneroberfläche für die Eingabe der SOLL-Daten im "teach-in-Modus"

Beleuchtung: Was die Beleuchtungsquelle betrifft, wird eine Laserquelle mit einer Wellenlänge von z.B. 650nm, oder eine Kombination aus mehreren Laserquellen eingesetzt. Es hat sich gezeigt, dass diodengepumpte Festkörperlaser mit einer Wellenlänge von 536 nm (grün) bei der Bandbreite an Oberflächenfarben von Härterosten zum Großteil bessere Kontrastierungen zulassen als Diodenlaser mit einer Wellenlänge von 635nm (rot). Denkbar ist auch eine Kombination aus zwei Laserquellen. Aus Kostengründen wird aber die Variante mit 635nm oft bevorzugt.

Als Alternative zur Laserbeleuchtung hat sich auch die Streifenprojektion als vorteilhaft herausgestellt. Aufgrund der Einschränkungen, Platzbedarf und Fremdlichtempfindlichkeit kann man aber davon ausgehen, dass dem Laser der Vorzug gegeben wird.

Kameratechnik: unter Berücksichtigung der Anforderungen an die Verarbeitungsgeschwindigkeit und der geforderten Positionsgenauigkeit sind bei der oben beschriebenen Applikation mehr als 500 Lichtschnitte/ Sekunde erforderlich. Bei einer Kameraauflösung von 1000x1000 Pixel sind das ca. 500MP Bildinformation/Sekunde. Am Markt verfügbare hochauflösende Standardkameras schaffen in diesem Zusammenhang gerade 1/10 der geforderten Informationsmenge. In diesem Zusammenhang sind daher zwei Kernaufgaben zu lösen: Erstens geht es darum, eine kostengünstige Lösung für eine Kamera mit einer Taktrate von 500Hz zu finden (Standardkameras kommen bez. Taktrate auf max. 50Hz), zweitens, geht es darum, die generierte Datenmenge vor der Übertragung an den Bildverarbeitungsrechner auf das wesentliche zu reduzieren, d.h. alles was keine Information enthält, sollte bereits in der Kamera gelöscht werden (Datenvorverarbeitung).

Software: Es hat sich weiters ergeben, dass es Softwarepakete für die Modellierung von 3D-Daten gibt. Dabei wird aus einer dreidimensionalen Punktewolke ein Geometriemuster generiert, anhand dessen die unterschiedlichsten Berechnungen und Auswertungen vorgenommen werden können.

Das Aktorsystem (3D-Greifernachführung) besteht in einer Ausführungsform aus einer
- echtzeitfähigen Bahn-Subsystemsteuerung für die Nachführung des Greifersystems entsprechend der 3D-Sensordaten (Adaptive-Entwicklung) und einer
- kompakten, servogeführten high-speed Manipulationsmechanik.

Manipulationsmechanik: Bevorzugt ist ein leichtes, kompaktes und präzises Achsensystems mit mindestens fünf Freiheitsgraden. Am Markt verfügbare Komponenten sind entweder reine Linear- oder Knickarmrobotersysteme.

Der Bedarf an einem hybriden System resultiert vor allem aus der Anforderung an die Verarbeitungsgeschwindigkeit und dem Arbeitsbereich. Während Linearsysteme zu langsam sind, ist bei Knickarmrobotersystemen das Gewicht hinderlich. Dies insbesondere dann, wenn Arbeitsbereiche von mehreren Metern abzudecken und die Knickarmroboter dazu in der Linearachse zu bewegen sind.

Was die Software betrifft, liegt das Hauptaugenmerk in der Entwicklung einer Bahnsteuerung für das Achsensystem der Manipulationsmechanik.

Weitere Einzelheiten, Merkmale und Vorteile der Erfindung ergeben sich aus der beispielhaften Beschreibung mit Bezug auf die angeschlossenen Zeichnungen.

Es zeigt:
Fig. 1 in Schrägansicht eine Anordnung zum Ausführen des erfindungsgemäßen Verfahrens in Form einer Kabine,
Fig. 2 die Anordnung aus Fig. 1 ohne Kabine von vorne gesehen,
Fig. 3 die Anordnung aus Fig. 1 ohne Kabine in Seitenansicht,
Fig. 4 eine Draufsicht auf die Anordnung der Fig. 1 bis 3 ohne Kabine,
Fig. 5 schematisiert in Seitenansicht eine andere Ausführungsform einer Anlage zum Ausführen des erfindungsgemäßen Verfahrens,
Fig. 6 eine Draufsicht hiezu,
Fig. 7 eine weitere Ansicht der Anordnung aus Fig. 5 und 6,
Fig. 8 in Seitenansicht eine weitere Ausführungsform einer Anordnung zum Ausführen des erfindungsgemäßen Verfahrens,
Fig. 9 eine Draufsicht hiezu,
Fig. 10 eine weitere Seitenansicht der Anordnung aus Fig. 8 und 9.

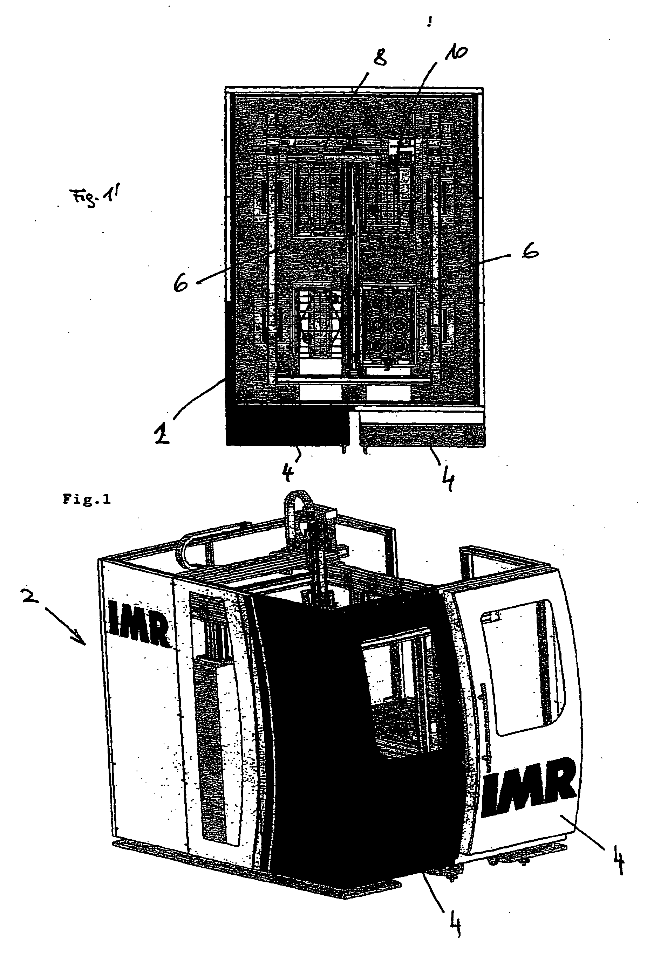

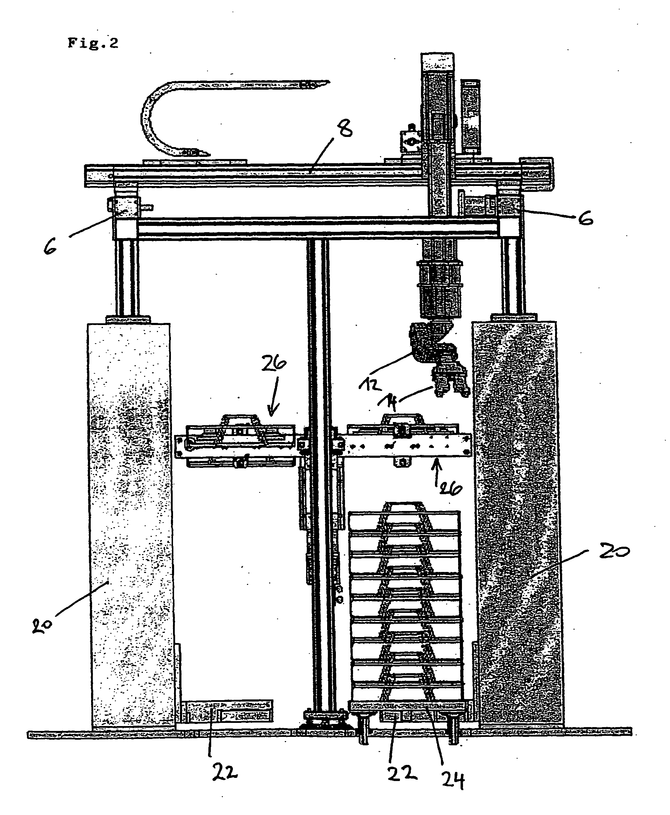

Die in Fig. 1 bis 4 gezeigte Anordnung ("Prozesskabine") zum Ausführen des erfindungsgemäßen Verfahrens, also zum Handhaben von Getriebeteilen, wenn diese aus Gebinden, in welchen die noch nicht gehärteten Teile (Grünteile) in weitere Gebinde, im gezeigten Beispiel Härteroste, umzusetzen sind und wobei nach dem Härten die gehärteten Teile (Rotteile) aus den Härterosten wieder in Gebinde umzusetzen sind.

Diese in Fig. 1 gezeigte Vorrichtung besteht aus einem Rahmen, an dem über einen Querbalken ein Greifer in zwei Richtungen, die zueinander senkrecht stehen, verfahrbar ist. Innerhalb des Rahmens, der außen durch Verkleidungsplatten oder Türen nach Art einer Kabine verschlossen sein kann (Fig. 1), sind Positionen für die Stapel aus Gebinden mit Grünteilen und Positionen für Stapel aus Gebinden für Rotteile (Härteroste) vorgesehen. Jeder Position für Gebinde bzw. Härteroste ist ein Vertikalförderer zugeordnet, sodass das jeweils oberste Gebinde bzw. der oberste Härterost eines Stapels aus Gebinden bzw. Härterosten in die für die Handhabung von Teilen durch den Greifer, der beispielsweise als Knickarm-Roboter ausgeführt und mit einem Adapter ausgestattet ist, der an die jeweils zu handhabenden Teile angepasst ist, richtige Lage gehoben werden kann.

Dem Greiferarm ist ein 3D-Visionsystem (3D-Sensor) in Form einer (Video-)Kamera zugeordnet, die als Gebinde-Erkennungseinrichtung und als Einrichtung zum Erfassen der Lage von Teilen in den Gebinden ausgeführt ist. Mit Hilfe des 3D-Visionsystems werden nicht nur die Position und Stellung von handzuhabenden Teilen, sondern auch die Lage und Form der Gebinde und der Nester in diesen erfasst. So können Gebinde, insbesondere Härteroste, die für die weitere Benutzung unbrauchbar sind, ausgeschieden werden. Gründe für die Unbrauchbarkeit von Härterosten können Verformungen derselben im Zuge eines Härtevorganges sein, die über ein bestimmtes Maß hinausgehen.

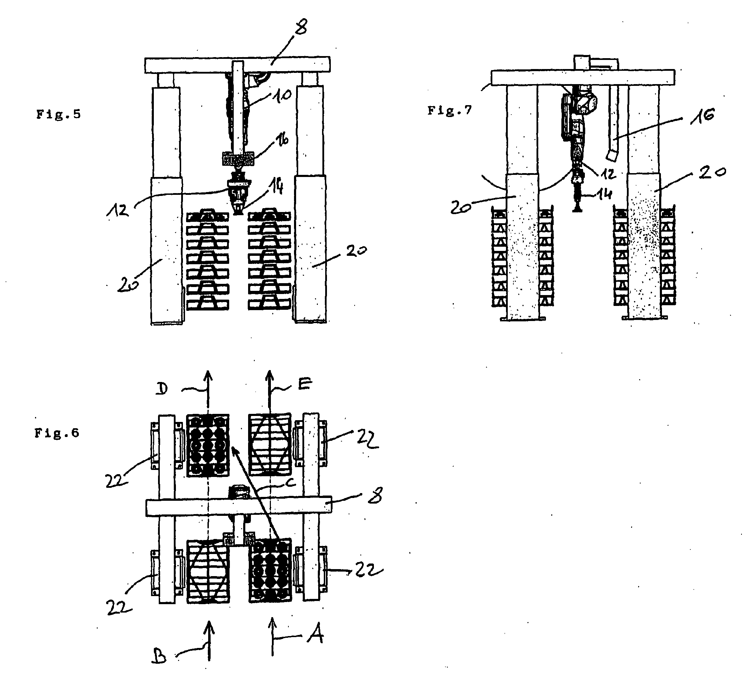

In den Fig. 5 bis 7 ist eine andere Ausführungsform einer Anordnung (Prozesskabine) für das Ausführen des erfindungsgemäßen Verfahrens gezeigt, wobei in Fig. 5 eine Vorderansicht mit Blickrichtung von unten der Fig. 6 und in Fig. 7 eine Seitenansicht mit Blickrichtung von links der Fig. 6 gezeigt ist.

Auch bei der Ausführungsform einer Prozesskabine gemäß Fig. 5 bis 7 sind innerhalb des Gestells der Vorrichtung an der oben über den Balken ein Greifer (Manipulator) durch das 3D-Visionsystem, das an ihm befestigt ist, angesteuert ist, vorgesehen. An dem Manipulator ist ein Aktor mit werkstückbezogener Greifeinrichtung vorgesehen, um Werkstücke, z.B. Grünteile, aus Gebinden, in denen sie herangefördert werden, in Härteroste umzusetzen und umgekehrt gehärtete Werkstücke Rotteile aus den Härterosten wieder in Transport-Gebinde umzusetzen.

Auch bei dieser Ausführungsform ist jeder Position für Gebinde bzw. Gebindestapel ein Vertikalförderer angeordnet, der den Gebindestapel schrittweise anhebt, um das jeweils oberste Gebinde in die für die Entnahme bzw. das Ablegen eines Werkstückes richtige Position zu bewegen. Dabei ist vorgesehen, dass Transportgebinde von unten der Fig. 6 her der Prozesskabine zugeführt werden und auch mehrere Gebinde, in welchen die Werkstücke für die spätere Behandlung (Härten) umgesetzt werden sollen, von unten leer zugeführt werden.

In die in Fig. 6 rechts unten angeordnete Position innerhalb der Prozesskabine werden ebenfalls Transportgebinde und volle Körbe zugeführt. Zusätzlich ist in der Ausführungsform von Fig. 6 eine Vorrichtung vorgesehen, um Körbe aus den Fig. 6 unten liegenden Positionen in die in Fig. 6 oben liegenden Positionen zu bewegen. Aus den in Fig. 6 oben liegenden Positionen werden volle Körbe und leere Transportgebinde (links oben) bzw. leere Transportgebinde und leere Körbe abgefördert (rechts oben). Dabei ist vorgesehen, dass der Manipulator Werkstücke aus der Position rechts unten der Fig. 6 in die Position links oben der Fig. 6 umsetzt.

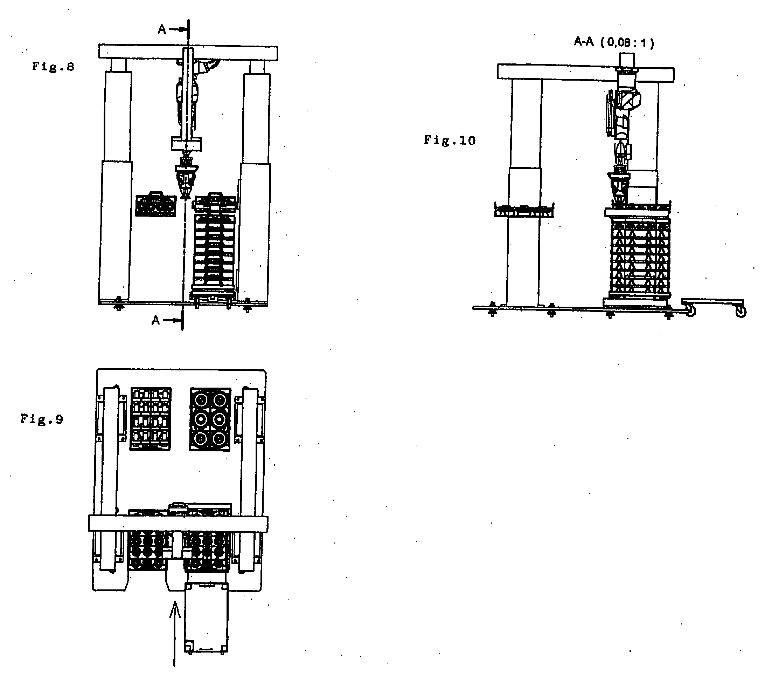

Die in den Fig. 8 bis 10 gezeigte Ausführungsform entspricht im Wesentlichen der von Fig. 5 bis 7 mit der Maßgabe, dass hier das 3D-Visionsystem am Manipulator anders als in Fig. 5 bis 7 angeordnet ist.

Wie in Fig. 1 gezeigt, kann die erfindungsgemäße Vorrichtung in einer Kabine 2, die wenigstens an ihrer Vorderseite Türen 4 aufweist, angeordnet sein. Die innerhalb der Kabine 2 angeordnete Vorrichtung besitzt einen Grundrahmen aus vertikalen und lotrechten Rahmenteilen, wobei an zwei oberen horizontalen Rahmenteilen 6 ein aus zwei Teilen bestehender Querbalken 8 erfahrbar ist. Auf dem Querbalken 8 seinerseits ist ein Träger 10 für einen Manipulator 12 mit Greifer 14 verfahrbar (x- und y-Richtung) . Zusätzlich ist der Manipulator 12 auf und ab (z-Richtung) verfahrbar und drehbar.

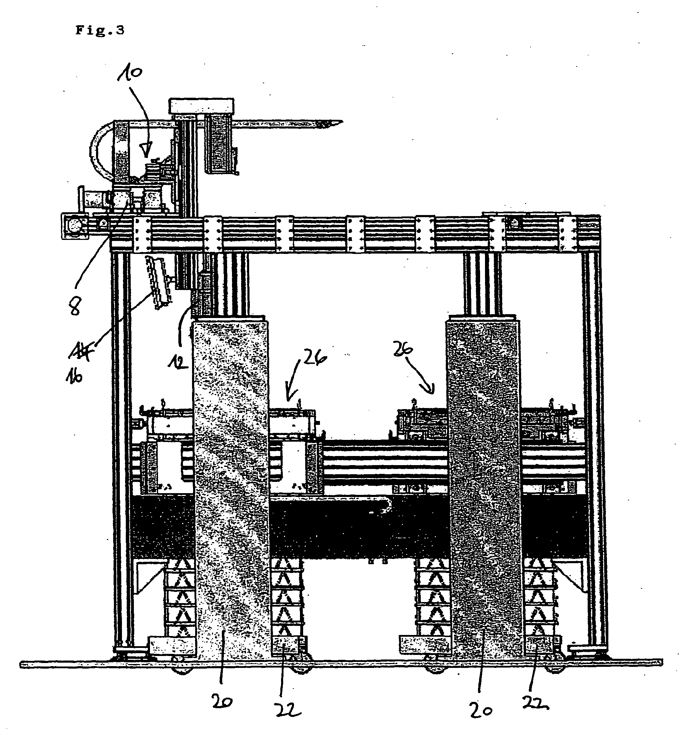

Bei der in den Fig. 1 bis 4 gezeigten Ausführungsform sind an vertikalen Rahmenteilen 20 Hebevorrichtungen 22 für Gebinde, in welche Teile einzusetzen bzw. aus welchen Teile zu entnehmen sind, vorgesehen. Solche Gebinde werden auf Wagen 24 herangefahren. Zusätzlich ist im Mittelbereich des Rahmens der erfindungsgemäßen Vorrichtung auf beiden Seiten je eine Einrichtung 26 für den Transport und die Manipulation für Härteroste/Gebinde vorgesehen. Aus Fig. 3 ist noch ersichtlich, dass am Kopf 10 zusätzlich zu dem Manipulator 12 im 3D-Visionsystem bestehend aus Kamera mit integrierter Beleuchtungsquelle, insbesondere in Form von Lasern angeordnet ist.

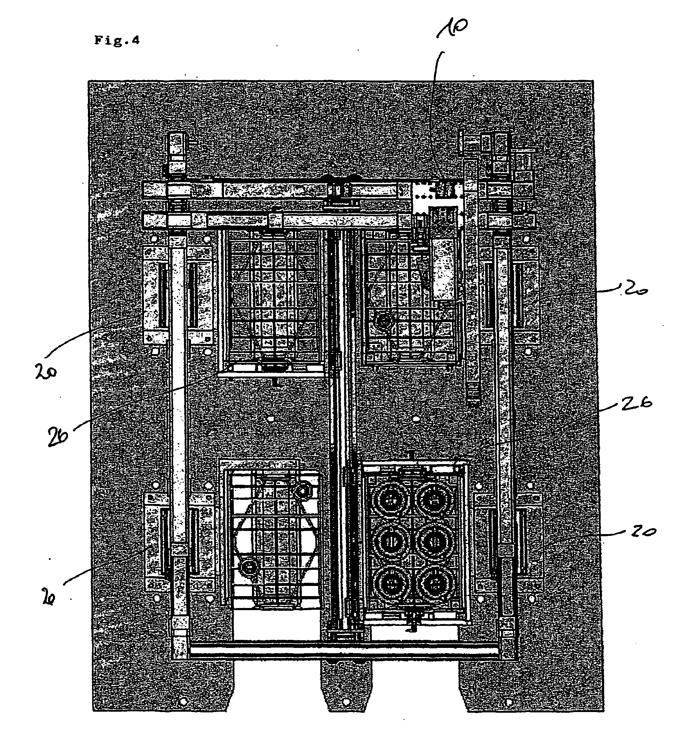

Fig. 4 zeigt die Vorrichtung nochmals in ihren Einzelheiten in Draufsicht.

Bei der in den Fig. 5 bis 7 gezeigten Ausführungsform ist wieder der Kopf 10 für den Manipulator 12 und den Greifer 14 sowie die 3D-Visionskamera mit integrierter Beleuchtung 16 vorgesehen. Insbesondere Fig. 6 zeigt, dass Grünteile in Transportgebinden in Richtung des Pfeiles A und leere Härteroste in Richtung des Pfeiles B zugeführt werden. Die Grünteile werden in Richtung des Pfeiles C in Härteroste umgesetzt. Die Härteroste werden dann in Richtung des Pfeiles D und die leeren Gebinde in Richtung des Pfeiles E aus der Vorrichtung entfernt. Dieses Umsetzten der Grünteile aus Transportgebinden in Härteroste in Richtung des Pfeiles C erfolgt mit Hilfe des Manipulators 12 mit dem Greifer 14, wobei Bewegungen wie oben beschrieben unter Auswertung der von dem 3D-Visionsystem 16 gewonnenen Daten gesteuert wird.

Die Fig. 8 bis 10 zeigen eine geringfügig gegenüber den Fig. 5 bis 7 abgeänderte Ausführungsform in unterschiedlichen Arbeitsstellungen.

Wesentlich für die erfolgreiche Handhabung von Teilen ist es, dass mit den beschriebenen Anlagen erreicht werden kann, dass Gebinde, in welchen die Werkstücke (z.B. Getriebeteile) einer weiteren Bearbeitung oder Behandlung unterworfen werden (Härten in Härterosten) durch das 3D-Visionsystem dreidimensional vermessen werden und fehlerhafte Gebinde (z.B. verzogene, verworfene Härteroste) ausgeschieden werden.

Wenn durch das 3D-Visionsystem festgestellt wird, dass ein Gebinde noch verwendbar ist, um Werkstücke für die weitere Behandlung aufzunehmen, also wenn der Härterost brauchbar ist, wird die Lage der Nester mit Hilfe des 3D-Visionsystems (Bilderzeugungssystem) erfasst und diese Daten werden dem Manipulator (beispielsweise ein Vierachsen-Roboter) übertragen, damit das Werkstück richtig in das Gebinde (den Härterost bzw. ein Nest des Härterostes) eingesetzt werden kann. Dabei ist vorgesehen, dass die vom 3D-Sensor erfassten Daten im Sinne einer Verringerung der Daten vorbereitet werden, um die Datenmenge zu verkleinern und so eine rasche Auswertung der Daten für das Steuern der Bewegungen des Greifers zu ermöglichen.

Mit der Erfindung kann auch erreicht werden, dass die Lage der Werkstücke in den Gebinden durch das Bilderzeugungssystem dreidimensional erfasst wird, sodass der Roboter das Werkstück so erfassen und entnehmen kann, dass es nicht beschädigt wird. Sinngemäßes gilt für das Umsetzen von Werkstücken aus den Härterosten in Gebinde, um diese aus der Vorrichtung abzutransportieren.

Das Be- und Entladesystem gemäß der Erfindung weist eine Reihe von wirtschaftlichen Vorteilen auf, wie z.B.:
1. Berührungslose und dreidimensionale Erfassung geometrischer und qualitätsrelevanter Eigenschaften und Merkmale mit bisher unerreichter Präzision was eine uneingeschränkte Automatisierung der Härterostbe- und Härterostentladevorgänge zulässt. Das Einsparungspotential aus der Substitution der Arbeitskraft beläuft sich im Dreischichtbetrieb je Produktionslinie und Härteofen auf ca. EUR 180k p.a.
2. Aus der dreidimensionalen Erfassung der Härterost- oder Transportgebindegeometrien können exakte Werte und Aussagen hinsichtlich deren geometrischer und qualitätsrelevanter Eigenschaften gemacht werden, z.B. dreidimensionaler Verzug, unzulässige Beschädigungen.

## Patentansprüche

1. Verfahren zum Handhaben von Werkstücken beim Umsetzen derselben aus einem Gebinde in ein weiteres Gebinde, **dadurch gekennzeichnet, dass** die Form und Lage wenigstens des Gebindes, in das die Werkstücke abzusetzen sind, mit Hilfe eines 3D-Sensors räumlich erfasst wird und dass die räumliche Lage des umzusetzenden Werkstückes erfasst wird.

2. Vorfahren nach Anspruch 1, **dadurch gekennzeichnet, dass** die durch das räumliche Erfassen von Gebinde und/oder Werkstück erzeugten Daten im Sinne einer Verkleinerung der Datenmenge verarbeitet werden, bevor sie zur Steuerung des Umsetzens der Werkstücke ausgewertet werden.

3. verfahren nach Anspruch 1 oder 2, **dadurch gekennzeichnet, dass** Gebinde, in die Werkstücke abzusetzen sind, ausgeschieden werden, wenn beim Erfassen der räumliche Struktur des Gebindes Abweichungen gegenüber der vorausgesetzten Form festgestellt werden.

4. Verfahren nach Anspruch 3, **dadurch gekennzeichnet, dass** der 3D-Sensor ein 3D-Lichtschnittsensor ist.

5. Verfahren nach einem der Ansprüche 1 bis 4, **dadurch gekennzeichnet, dass** zur Beleuchtung des Werkstückes und/oder des Gebindes eine linienförmige, lasergestützte Beleuchtungsquelle (16) verwendet wird.

6. Verfahren nach einem der Ansprüche 1 bis 5, **dadurch gekennzeichnet, dass** zum Handhaben der werkstücke ein an einem Manipulator (12), z.B. einem Mehrarmroboter, befestigter Greifer (14) verwendet wird.

7. Verfahren nach Anspruch 6, **dadurch gekennzeichnet, dass** der Manipulator (12) ein Vierarmroboter ist.

8. Vorrichtung zum Durchführen des Verfahrens nach einem oder mehreren der Ansprüche 1 bis 7, **gekennzeichnet durch** eine Prozesskabine (2), in der wenigstens eine Position für Gebinde mit handzuhahenden Werkstücken und wenigstens eine Position für Gebinde, in welche die Werkstücke abzusetzen sind, um sie einer weiteren Bearbeitung zuzuführen, vorgesehen ist, dass in der Prozesskabine (2) ein Manipulator (12) mit einem an die Werkstückform angepassten Adapter vorgesehen ist, wobei der Adapter nach mehreren Achsen beweglich ist, und dass dem Manipulator (12) ein 3D-Sensor zugeordnet ist.

9. Vorrichtung nach. Anspruch 8, **dadurch gekennzeichnet, dass** der 3D-Sensor und der Manipulator (12) an einer Brücke in X- und Y-Richtung verfahrbar montiert sind.

10. Vorrichtung nach Anspruch 8 oder 9, **dadurch gekennzeichnet, dass** den wenigstens zwei Positionen für Gebinde Hebevorrichtungen (22) zugeordnet sind.

11. Vorrichtung nach Anspruch 10, **dadurch gekennzeichnet, dass** die Hebevorrichtungen (22) zum Heben von Stapeln aus Gebinden eingerichtet sind.

12. Vorrichtung nach einem der Ansprüche 8 bis 11, **dadurch gekennzeichnet, dass** der 3D-Sensor ein 3D-Lichtschnittsensor ist, dem eine linienförmige, lasergestüzte Beleuchtungsquelle (16) zugeordnet ist.

13. Vorrichtung nach einem der Ansprüche 1 bis 12, **dadurch gekennzeichnet, dass** der 3D-Sensor mit einem Bildverarbeitungsrechner verbunden ist, der seinerseits mit dem Manipulator (12) verbunden ist.

## Claims

1. A method for manipulating workpieces during their transfer from one container into another container, **characterized in that** the shape and the position of at least one container, into which the workpieces should be placed, are spatially determined with the aid of a 3D sensor, and **in that** the spatial position of the workpiece to be transferred is determined.

2. The method according to Claim 1, **characterized in that** the data generated due to the spatial determination of the container and/or the workpiece is processed in the sense of a reduction of the data volume before it is evaluated in order to control the transfer of the workpieces.

3. The method according to Claim 1 or 2, **characterized in that** containers, into which workpieces should be placed, are rejected if deviations from the presupposed shape are detected during the determination of the spatial structure of the container.

4. The method according to Claim 3, **characterized in that** the 3D sensor consists of a 3D light section sensor.

5. The method according to one of Claims 1 to 4, **characterized in that** a linear, laser-assisted light source (16) is used for illuminating the workpiece and/or the container.

6. The method according to one of Claims 1 to 5, **characterized in that** a gripper (14) mounted on a manipulator (12) such as, e.g., a robot with multiple arms is used for manipulating the workpieces.

7. The method according to Claim 6, **characterized in that** the manipulator (12) consists of a robot with four arms.

8. A device for carrying out the method according to at least one of Claims 1 to 7, **characterized by** a process compartment (2), in which at least one the position is provided for containers with workpieces to be manipulated and at least one position is provided for containers, into which the workpieces need to be placed in order to be transported to another processing station, wherein a manipulator (12) with an adapter that is adapted to the shape of the workpieces is provided in the process compartment (2), wherein the adapter can be moved along several axes, and wherein a 3D sensor is assigned to the manipulator (12).

9. The device according to Claim 8, **characterized in that** the 3D sensor and the manipulator (12) are mounted on a bridge such that they can be displaced in the X-direction and the Y-direction.

10. The device according to Claim 8 or 9, **characterized in that** the lifting devices (22) are assigned to the at least two positions for containers.

11. The device according to Claim 10, **characterized in that** the lifting devices (22) are designed for lifting stacks out of containers.

12. The device according to one of Claims 8 to 11, **characterized in that** the 3D sensor consists of a 3D light section sensor, to which a linear, laser-assisted light source (16) is assigned.

13. The device according to one of Claims 1 to 12, **characterized in that** the 3D sensor is connected to an image processing computer that in turn is connected to the manipulator (12).

## Revendications

1. Procédé pour le maniement de pièces usinées lors de leur transfert d'un conteneur dans un autre conteneur, **caractérisé en ce que** la forme et la position au moins du conteneur, dans lequel les pièces usinées doivent être déposées, sont détectées dans l'espace à l'aide d'un capteur 3D, et **en ce que** la position spatiale de la pièce usinée à transférer est détectée.

2. Procédé selon la revendication 1, **caractérisé en ce que** les données produites par la détection spatiale du conteneur et/ou de la pièce usinée sont traitées au sens d'une réduction du volume de données, avant d'être évaluées pour la commande du transfert de la pièce usinée.

3. Procédé selon la revendication 1 ou 2, **caractérisé en ce que** les conteneurs, dans lesquels les pièces usinées doivent être déposées, seront évacués si des écarts par rapport à la forme attendue sont détectés lors de la détection de la structure spatiale du conteneur.

4. Procédé selon la revendication 3, **caractérisé en ce que** le capteur 3D est un capteur de coupe optique 3D.

5. Procédé selon l'une des revendications 1 à 4, **caractérisé en ce qu'**une source d'éclairage (16) linéaire assistée par laser est utilisée pour l'éclairage de la pièce à usiner et/ou du conteneur.

6. Procédé selon l'une des revendications 1 à 5, **caractérisé en ce qu'**un grappin (14) fixé à un manipulateur (12), par exemple un robot à plusieurs bras, est utilisé pour le maniement des pièces usinées.

7. Procédé selon la revendication 6, **caractérisé en ce que** le manipulateur (12) est un robot à quatre bras.

8. Dispositif pour la mise en oeuvre du procédé selon l'une ou plusieurs des revendications 1 à 7, **caractérisé par** une cabine de traitement (2), dans laquelle sont prévues au moins une position pour les conteneurs avec les pièces usinées à manier, et au moins une position pour les conteneurs dans lesquels des pièces usinées sont censées être déposées pour être acheminées vers un traitement ultérieur, en ce que dans la cabine de traitement (2) est prévu un manipulateur (12) avec un adaptateur adapté aux pièces usinées, où l'adaptateur est déplaçable sur plusieurs axes, et en ce qu'un capteur 3D est attribué au manipulateur (12).

9. Dispositif selon la revendication 8, **caractérisé en ce que** le capteur 3D et le manipulateur (12) sont montés sur un pont de façon déplaçable dans les directions X et Y.

10. Dispositif selon la revendication 8 ou 9, **caractérisé en ce que** des dispositifs de levage (22) sont attribués aux au moins deux positions pour les pièces usinées.

11. Dispositif selon la revendication 10, **caractérisé en ce que** les dispositifs de levage (22) sont conçus pour le levage de piles hors des conteneurs.

12. Dispositif selon l'une des revendications 8 à 11, **caractérisé en ce que** le capteur 3D est un capteur de coupe optique 3D, auquel est attribué une source d'éclairage (16) linéaire, assistée par laser.

13. Dispositif selon l'une des revendications 1 à 12, **caractérisé en ce que** le capteur 3D est relié à un ordinateur de traitement d'images, qui est pour sa part relié au manipulateur (12).
